# EUROPÄISCHE PATENTANMELDUNG

(11) **EP 1 464 855 A1**
(43) Veröffentlichungstag der Anmeldung: **06.10.2004**
(21) Anmeldenummer: 03007830.7
(22) Anmeldetag: 04.04.2003
(51) Int. Cl.: F16C 32/06

(54) **Strömungsversorgungseinrichtung für ein Axial-Kippelement-Lager**

(71) Anmelder: SIEMENS AKTIENGESELLSCHAFT, 80333 München (DE)
(72) Erfinder: Ceric, Hajrudin, 46045 Oberhausen (DE); Duzic, Andrija, 40223 Düsseldorf (DE); Pasqualino, Salvatore, 40593 Düsseldorf (DE)

(57) **Zusammenfassung**

Die Erfindung betrifft ein Axial-Kippelement-Lager. Um ein Lager zu schaffen, das eine gleichmäßige Lastverteilung der vom Lager aufzunehmenden Lagerkraft auf die einzelnen Kippelemente (6) ermöglicht, wird mit der Erfindung vorgeschlagen ein Axial-Kippelement-Lager (16, 17) mit einer Mehrzahl durch mit jeweils wenigstens einem hydraulisch betreibbaren Kolben (7, 10) abgestützter Kippelemente (6), wobei die die Kolben (7, 10) aufnehmenden Kolbenkammern (8, 11) strömungstechnisch miteinander verbunden sind.

## Beschreibung

Die Erfindung betrifft ein Axial-Kippelement-Lager. Axiallager der vorgenannten Art sind aus dem Stand der Technik an sich bekannt und werden insbesondere eingesetzt zur Rotorlagerung. Im montierten Zustand liegen die Kippelemente des Lagers an entsprechend ausgebildeten Anlageflächen des Rotors an, infolge dessen es zu einer Abstützung des Rotors in axialer Richtung kommt. In axialer Richtung wirkende Toleranzen, die durch Abweichungen in der Fertigung oder Montage des Axial-Kippelement-Lagers oder der Ausbildung der Anlageflächen des Rotors begründet sein können, führen in nachteiliger Weise zu einer ungleichförmigen Belastung der einzelnen Kippelemente des Lagers. Dies kann zu einer Überlastung einzelner Kippelemente führen, was in nachteiliger Weise den Totalausfall des Axial-Kippelement-Lagers zur Folge hat.

Zur Überwindung des vorbeschriebenen Nachteils ist es aus dem Stand der Technik bekannt, die Kippelemente eines Axiallagers mechanisch miteinander zu verbinden, beispielsweise unter Verwendung wippenartig ausgebildeter Ausgleichselemente. Die Anordnung solcher Ausgleichselemente schafft eine kraftübertragende Verbindung zwischen benachbarten Kippelementen, so dass die auf ein Kippelement einwirkende Kraft zur zumindestens teilweisen Lastübernahme auf die benachbarten Kippelemente übertragen wird. Ein einzelnes Kippelement kann so entlastet werden, denn verteilt sich die auf das Kippelement einwirkende Kraft auch auf die dem Kippelement benachbart angeordneten Kippelemente. Die Überlastung eines Kippelementes kann hierdurch zwar nicht verhindert werden, doch erlaubt die Anordnung der Ausgleichselemente eine Kraftverteilung auch auf die dem belasteten Kippelement benachbart angeordneten Kippelemente, so dass insgesamt vom Axiallager eine höhere Axialkraft aufgenommen werden kann, bevor es infolge der Überlastung eines Kippelementes zum Totalausfall des Axiallagers kommt. Bekannt sind solche Ausgleichselemente aufweisenden Axiallager unter der Bezeichnung "Equalising Bearing".

Zwar ermöglichen die mit zusätzlichen Ausgleichselementen ausgerüsteten Axiallager die Aufnahme vergleichsweise höherer Axialkräfte, doch ergibt sich auch bei diesen Lagern in nachteiliger Weise im Falle der Überlastung einer Segmentgruppe ein Totalausfall des gesamten Lagers. Die mechanisch wirkenden Ausgleichselemente sind zudem störanfällig und einer durch Reibung bedingten Abnutzung unterworfen, so dass die Lastverteilung vom kraftbeaufschlagten Kippelement auf die benachbarten Kippelemente ungleichmäßig erfolgt.

Hiervon ausgehend ist es Aufgabe der Erfindung, unter Vermeidung der vorgenannten Nachteile ein Axial-Kippelement-Lager bereitzustellen, das eine weitestgehend gleichmäßige Lastverteilung der vom Lager aufzunehmenden Lagerkraft auf die einzelnen Kippelemente ermöglicht.

Gelöst wird diese Aufgabe durch ein Axial-Kippelement-Lager mit einer Mehrzahl durch mit jeweils wenigstens einem hydraulisch betreibbaren Kolben abgestützter Kippelemente, wobei die die Kolben aufnehmenden Kolbenkammern strömungstechnisch miteinander verbunden sind.

Vorgeschlagen wird mit der Erfindung ein selbstnachstellendes Axial-Kippelement-Lager, bei welchem jedes Kippelement durch mindestens einen hydraulisch betreibbaren Kolben abgestützt wird. Die die Kippelemente abstützenden Kolben werden dabei jeweils in einer Kolbenkammer geführt, wobei erfindungsgemäß vorgesehen ist, dass die einzelnen Kolbenkammern strömungstechnisch miteinander verbunden sind. Vorteil dieser erfindungsgemäßen Lehre ist, dass die auf ein Kippelement einwirkende Kraft auf das in der Kolbenkammer befindliche Hydraulikmittel unter Drucksteigerung einwirkt, wobei es infolge der strömungstechnischen Verbindung der einzelnen Kolbenkammern zu einer gleichmäßigen Hydraulikmitteldruckverteilung in sämtlichen Kolbenkammern kommt. Die auf ein Kippelement einwirkende Kraft kann so gleichmäßig verteilt werden.

Wird im montierten Zustand des erfindungsgemäßen Axial-Kippelement-Lagers ein Kippelement stärker als die übrigen Kippelelemente belastet, so weicht der das kraftaufnehmende Kippelement abstützende Kolben vergleichsweise weiter zurück, wodurch das Hydraulikmittel aus der zugehörigen Kolbenkammer verdrängt wird. Da die Kolbenkammern sämtlicher Kolben strömungstechnisch miteinander verbunden sind, werden die übrigen Kolben in Abhängigkeit des aus der dem belasteten Kippelement zugeordneten Kolbenkammer verdrängten Hydraulikmittels weiter ausgefahren, infolge dessen es zu einer verstärkten Unterstützung der übrigen Kippelemente kommt. In vorteilhafter Weise wird hierdurch die Überlast des einzelnen Kippelementes hydraulisch auf sämtliche Kolben und mithin auch auf sämtliche Kippelemente gleichmäßig verteilt. Die Überlastung eines einzelnen Kippelementes oder einer durch Ausgleichselemente miteinander gekoppelten Kippelementgruppen kann so in vorteilhafter Weise unterbunden werden. Die erfindungsgemäßen Axial-Kippelement-Lager können im Vergleich zu den aus dem Stand der Technik bekannten Lagern eine vergrößerte Lagerkraft bei gleichzeitiger Steigerung der Lebensdauer aufnehmen.

Gemäß einem Merkmal der Erfindung bilden die Kolbenkammern einen gemeinsamen Druckraum. Die strömungstechnische Verbindung der einzelnen Kammern wird durch die Schaffung eines gemeinsamen Druckraumes auf insbesondere aus fertigungstechnischer Sicht einfache und kostengünstige Art und Weise realisiert. Vorgesehen sein kann in diesem Zusammenhang auch ein gemeinsamer von den einzelnen Kolbenkammern getrennt gebildeter Druckraum, wobei die einzelnen Kolben in den Kammern jeweils durch eine entsprechende strömungstechnische Verbindung mit dem gemeinsamen Druckraum in Verbindung stehen.

Als besonders vorteilhaft hat sich die Ausbildung der Kolbenkammern als Zylinderbohrungen herausgestellt. Es sind jedoch auch andere geometrische Ausgestaltungsformen der Kolbenkammern möglich, entscheidend ist jedoch, dass Kolben und Kolbenkammer in ihrer Größe auf das zu stützende Kippelement bzw. auf die vom jeweiligen Kippelement aufzunehmende Kraft abgestimmt sind. Bei der Ausgestaltung größerer Kippelemente können dabei pro Kippelement auch mehrere Kolben, d.h. Kolben-Kolbenkammern-Anordnungen vorgesehen sein.

Gemäß einem weiteren Merkmal der Erfindung sind die Kolbenkammern in einem gemeinsamen Basiselement ausgebildet. Auch diese Ausgestaltungsform ist insbesondere aus fertigungstechnischer Sicht von Vorteil, denn können mit der Ausbildung nur eines Basiselementes sämtliche Kolbenkammern zur Verfügung gestellt werden. Auch ist die erforderliche Handhabung nur eines gemeinsamen Basiselementes aus Gründen der Montage bzw. Demontage von Vorteil.

Vorzugsweise ist das Basiselement ringförmig ausgebildet. Der gemeinsame Druckraum kann dann das Basiselement umgebend gleichsam ringförmig ausgebildet sein, wodurch eine optimierte Druckverteilung des Hydraulikmediums in Bezug auf jede einzelne Kolbenkammer erreicht wird. Für eine strömungstechnische Verbindung der im Basiselement ausgebildeten Kolbenkammern mit dem das Basiselement umgebenden Druckraum können ausgehend von den jeweiligen Kolbenkammern im Basiselement entsprechend ausgebildete Leitungen vorgesehen sein, die die jeweilige Kolbenkammer mit dem für alle Kolbenkammern gemeinsamen Druckraum strömungstechnisch verbinden.

Gemäß einem weiteren Merkmal der Erfindung können die Kolbenkammern in Bezug auf den Durchmesser des ringförmig ausgebildeten Basiselementes in äquidistanten Abständen zueinander angeordnet sein. In vorteilhafter Weise wird hier durch eine gleichmäßige Druckverteilung in allen Kolbenkammern erreicht, so dass über die Kolben auf sämtliche Kippelemente die gleiche Abstützkraft wirkt. Hierdurch wird eine gleichmäßige Verteilung der auf die Kippelemente des Lagers wirkenden Lagerkraft erreicht, wodurch die Überlastung eines der Kippelemente in vorteilhafter Weise vermieden werden kann.

Gemäß einem weiteren Merkmal der Erfindung weist das Basiselement Ausnehmungen zur Aufnahme der Kippelemente auf. Diese Ausnehmungen sind vorzugsweise korrespondierend zum jeweils aufzunehmenden Kippelement ausgebildet und ermöglichen so eine passgenaue Anordnung der Kippelemente am Basiselement. Die für die Kippelemente vorgesehenen Ausnehmungen sind in Großaufnahmerichtung der Kolben der den kolbenaufnehmenden Kolbenkammer vorgeschaltet, so dass in montiertem Zustand Kippelemente und Kolbenkammern derart hintereinander angeordnet sind, dass eine kraftübertragende Verbindung zwischen den Kolben einerseits und der den Kolben jeweils zugeordneten Kippelemente andererseits ausgebildet wird.

Gemäß einem weiteren Merkmal der Erfindung ist das Basiselement austauschbar an einer Trageinheit angeordnet. Hierdurch wird zum Einen eine einfache Handhabung ermöglicht, zum Anderen kann insbesondere im Reparaturfall eine wenig aufwendige Montage bzw. Demontage ermöglicht werden. Je nach Ausgestaltung von Basiselement und Trageinheit kann dabei vorgesehen sein, dass eine Trageinheit der Anordnung mehrerer Basiselemente dient, wodurch eine mehrere Axial-Kippelement-Lager aufnehmende Trageinheit entsteht. Darüber hinaus kann die Trageinheit dazu verwandt werden, auch radial wirkende Lager oder Komponenten hiervon aufzunehmen.

Zweckmäßigerweise weist eine Gasturbine ein Axial-Kippelement-Lager auf, welches mit einer Mehrzahl durch mit jeweils wenigstens einem hydraulisch betreibbaren Kolben abgestützter Kippelemente, wobei die die Kolben aufnehmenden Kolbenkammern strömungstechnisch miteinander verbunden sind. Weitere Merkmale und Vorteile der Erfindung ergeben sich aus der nachfolgenden Beschreibung anhand der Figuren. Dabei zeigen:
Figur 1: In einer teilgeschnittenen Seitenansicht die Axiallagerung einer Welle und
Figur 2: In teilgeschnittener Draufsicht die Ausbildung eines gemeinsamen Druckraumes.

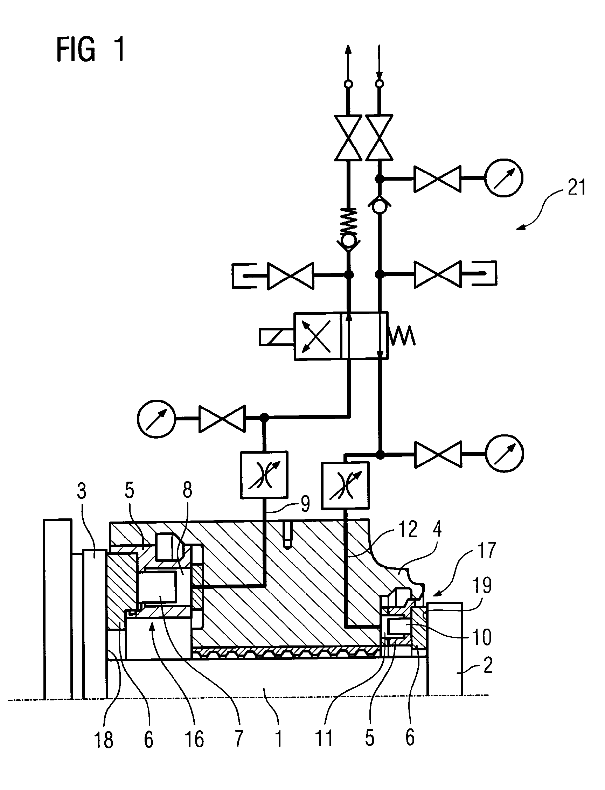

Figur 1 zeigt in teilgeschnittener Seitenansicht die beispielhafte Axiallagerung einer Welle 1. Zwischen dem Absatz 2 und dem Absatz 3 der Welle 1 ist zur axialen Lagerung der Welle 1 eine Trageinheit 4 angeordnet. Diese Trageinheit 4 beinhaltet zwei Axial-Kippelement-Lager 16 und 17, die zur Aufnahme von axial zur Welle 1 auftretenden Kräften gegen die Anlageflächen 18 und 19 der Absätze 3 und 2 gelagert sind. Absatz 3 samt Anlagefläche 18 ist dabei dem Axial-Kippelement-Lager 16 und der Absatz 2 samt Anlagefläche 19 dem Axial-Kippelement-Lager 17 zugeordnet.

Die Axial-Kippelement-Lager 16 und 17 bestehen jeweils aus einem Basiselement 5 sowie mehreren vom Basiselement aufgenommenen Kippelementen 6, die zur axialen Lagerung der Welle 1 an der jeweiligen Anlagefläche 18 bzw. 19 des jeweils zugeordneten Absatzes 2 bzw. 3 anliegen.

Erfindungsgemäß wird jedes Kippsegment 6 der Axial-Kippelement-Lager 16 und 17 durch einen Kolben 7 bzw. 10 abgestützt, wobei die die Kolben 7 bzw. 10 aufnehmenden Kolbenkammern 8 bzw. 11 strömungstechnisch miteinander verbunden sind. Wird das Kippelement 6 eines der beiden Axial-Kippelement-Lager 16 bzw. 17 stärker als die übrigen Kippsegmente belastet, so weicht der dahinter angeordnete Kolben 7 bzw. 10 zurück, wodurch Hydraulikmittel aus der als Zylinderbohrung ausgebildeten Kolbenkammer 8 bzw. 11 verdrängt wird. Da die einzelnen Kolbenkammern 8 bzw. 11 strömungstechnisch miteinander verbunden und nach außen abgedichtet sind, ergibt sich eine gleichmäßige Druckverteilung innerhalb des Hydraulikmediums, infolge dessen sämtliche Kolben 7 bzw. 10 der Axial-Kippelement-Lager 16 bzw. 17 weiter nach außen verfahren, was zu einer verstärkten Abstützung der den jeweiligen Kolben 7 bzw. 10 jeweils zugeordneten Kippelementen 6 führt. Diese Druckgleichverteilung wirkt der Überlastung nur eines Kippelements 6 entgegen, denn wird die auf ein Kippelement 6 verstärkt einwirkende Lagerkraft hydraulisch auf alle Kolben 7 bzw. 10 ein und desselben Axial-Kippelement-Lagers 16 bzw. 17 gleichmäßig verteilt. Ein infolge der Überlastung nur eines Kippelementes 6 herbeigeführter Totalausfall des Axial-Kippelement-Lagers 16 bzw. 17 kann so in vorteilhafter Weise vermieden werden.

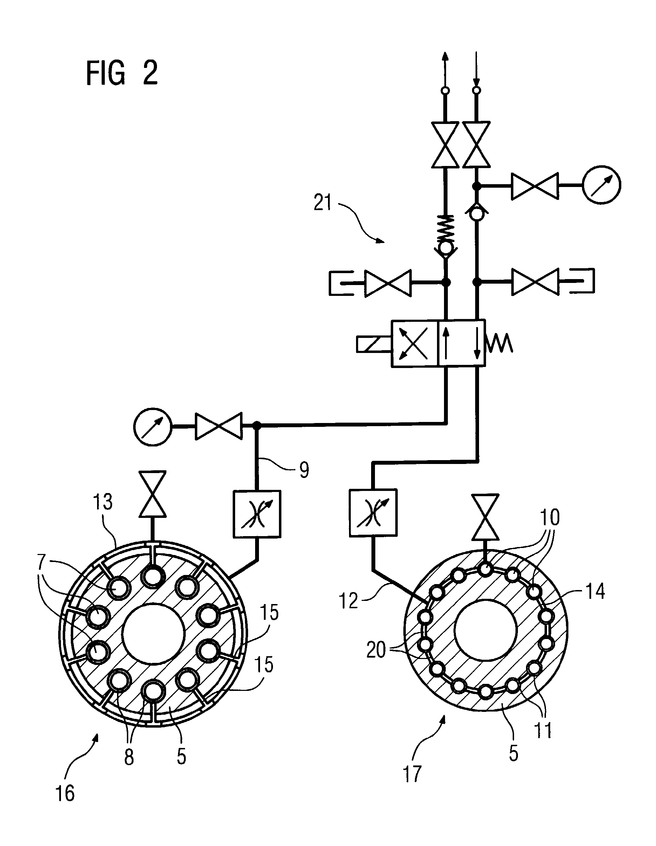

Figur 2 zeigt in einer gleichfalls teilweise geschnittenen Ansicht die Ausbildung eines gemeinsamen Druckraumes 13 bzw. 14 des Axial-Kippelement-Lagers 16 bzw. 17. Wie der Figur zu entnehmen ist, umfassen beide Lager jeweils ein Basiselement 5, in das in Form zylindrischer Bohrungen Kolbenkammern 8 bzw. 11 eingebracht sind. Diese Kolbenkammern 8 bzw. 11 dienen der Aufnahme der Kolben 7 bzw. 10, die die in dieser Figur nicht dargestellten Kippelemente 6 abstützen. Die Kolbenkammern 8 bzw. 11 sind strömungstechnisch miteinander verbunden, wobei das Axial-Kippelement-Lager 16 einen außerhalb des gemeinsamen Basiselementes 5 ausgebildeten Druckraum 13 zeigt, der über Bohrungen 15 an die Kolbenkammern 8 strömungstechnisch angeschlossen ist. Entsprechend der geometrischen Ausbildung des Basiselementes 5 ist auch der gemeinsame Druckraum 13 ringförmig ausgebildet.

Das Axial-Kippelement-Lager 17 verfügt gleichfalls über einen gemeinsamen Druckraum 14, wobei dieser Druckraum anders als bei dem Axial-Kippelement-Lager 16 nicht über einen außerhalb des Basiselementes 5 angeordneten gemeinsamen Druckraum, sondern durch die einzelnen Kolbenkammern 11 miteinander verbindende Bohrungen 20 geschaffen ist. Im Ergebnis ergibt sich unter Verwendung aber auch dieses gemeinsamen Druckraumes 14 eine gleichmäßige Verteilung des Hydraulikmitteldrucks, so dass sämtliche Kolben 10 des Axial-Kippelement-Lagers 17 mit der gleichen Kolbenkraft beaufschlagt werden. Sowohl die Ausführungsform gemäß Lager 16 als auch die Ausführungsform gemäß Lager 17 stellt somit ein selbstnachstellendes Axial-Kippelement-Lager dar, das in vorteilhafter Weise die Überlastung nur eines der in Figur 2 nicht dargestellten Kippelemente 6 unterbindet.

Angeschlossen an ein aus dem Stand der Technik an sich bekanntes hydraulisches System 21 sind die Axial-Kippelement-Lager 16 bzw. 17 über entsprechende Leitungen 9 bzw. 12.

## Patentansprüche

1. Axial-Kippelement-Lager (16, 17) mit einer Mehrzahl durch mit jeweils wenigstens einem hydraulisch betreibbaren Kolben (7, 10) abgestützter Kippelemente (6), wobei die die Kolben (7, 10) aufnehmenden Kolbenkammern (8, 11) strömungstechnisch miteinander verbunden sind.

2. Axial-Kippelement-Lager nach Anspruch 1,
**dadurch gekennzeichnet,**
**dass** die Kolbenkammern (8, 11) einen gemeinsamen Druckraum (13, 14) bilden.

3. Axial-Kippelement-Lager nach Anspruch 2,
**dadurch gekennzeichnet,**
**dass** der Druckraum (13, 14) an eine hydraulikmediumführenden Leitung (9, 12) angeschlossen ist.

4. Axial-Kippelement-Lager nach einem der Ansprüche 1-3, d a durch **gekennzeichnet**,
dass die Kolbenkammern (8, 11) als Zylinderbohrungen ausgebildet sind.

5. Axial-Kippelement-Lager nach einem der vorhergehenden Ansprüche,
**dadurch gekennzeichnet,**
**dass** die Kolbenkammern (8, 11) in einem gemeinsamen Basiselement (5) ausgebildet sind.

6. Axial-Kippelement-Lager nach einem der vorhergehenden Ansprüche,
**dadurch gekennzeichnet,**
**dass** das Basiselement (5) ringförmig ausgebildet ist.

7. Axial-Kippelement-Lager nach einem der vorhergehenden Ansprüche,
**dadurch gekennzeichnet,**
**dass** die Kolbenkammern (8,11) in Bezug auf den Durchmesser des ringförmig ausgebildeten Basiselementes (5) in äquidistanten Abständen zueinander angeordnet sind.

8. Axial-Kippelement-Lager nach einem der vorhergehenden Ansprüche,
**dadurch gekennzeichnet,**
**dass** das Basiselement (5) Ausnehmungen zur Aufnahme der Kippelemente (6) aufweist.

9. Axial-Kippelement-Lager nach einem der vorhergehenden Ansprüche,
**dadurch gekennzeichnet,**
**dass** für die Aufnahme eines Kippelementes (6) eine korrespondierend zum Kippelement (6) ausgebildete Ausnehmung vorgesehen ist, die in Wirkrichtung des Kolbens (7, 10) der den Kolben (7, 10) aufnehmenden Kolbenkammer (8,11) vorgeschaltet ist.

10. Axial-Kippelement-Lager nach einem der vorhergehenden Ansprüche,
**dadurch gekennzeichnet,**
**dass** das Basiselement (5) austauschbar an einer Trageinheit (4) angeordnet ist.

11. Gasturbine, insbesondere eine stationäre Gasturbine, mit einem Axial-Kippelement-Lager nach einem der vorhergehenden Ansprüche.
